# EUROPÄISCHE PATENTSCHRIFT

(11) **EP 3 230 166 B1**
(45) Veröffentlichungstag und Bekanntmachung des Hinweises auf die Patenterteilung: **17.10.2018**
(21) Anmeldenummer: 15791314.6
(22) Anmeldetag: 10.11.2015
(51) Int. Cl.: B65B 9/04, B65B 61/02, B32B 27/00, B32B 27/06, B65B 31/04, B65B 7/16

(54) **VERFAHREN ZUR ANORDNUNG VON ZWEI BESCHICHTUNGEN AUF EINER DECKELFOLIE**
METHOD FOR ARRANGING TWO COATINGS ON A COVER FILM
PROCÉDÉ DE FORMATION DE DEUX COUCHES SUR UN FILM DE COUVERTURE

(30) Priorität: 12.12.2014 DE 102014225719
(43) Veröffentlichungstag der Anmeldung: 18.10.2017
(73) Patentinhaber: GEA Food Solutions Germany GmbH, 35216 Biedenkopf-Wallau (DE)
(72) Erfinder: ACHENBACH, Wolfgang, 35236 Breidenbach (DE)
(74) Vertreter: Kutzenberger Wolff & Partner
(86) Internationale Anmeldenummer: PCT/EP2015/076188
(87) Internationale Veröffentlichungsnummer: WO 2016/091516

(56) Entgegenhaltungen:
- EP-A1- 2 669 198
- US-A1- 2010 018 154
- US-A1- 2013 199 128
- US-B1- 7 392 634

## Beschreibung

Die vorliegende Erfindung betrifft ein Verfahren zur Herstellung einer Verpackung mit einer Verpackungsmaschine, bei dem eine Folie auf eine gefüllte Verpackungsmulde gesiegelt wird, wobei jede Verpackungsmulde intermittierend mit einem bestimmten Vorzug entlang der Verpackungsmaschine transportiert wird. Des Weiteren betrifft die vorliegende Erfindung eine Verpackungsmaschine zur Herstellung einer Verpackung mit einer Siegelstation, die eine Folie an eine Verpackungsmulde siegelt und die die Verpackungsmulden intermittierend jeweils mit einem Vorzug transportiert. Außerdem betrifft die Erfindung eine Verpackung aufweisend eine Verpackungsmulde, die mit einer Deckelfolie verschlossen ist.

Derartige Verfahren und/oder Verpackungsmaschinen, beispielsweise sogenannte Thermoformer oder Traysealer, sind aus dem Stand der Technik bekannt. Siehe z.B US-A-2013/0199128. Bei diesen Verpackungsmaschinen wird beispielsweise eine Unterfolienbahn von einer Vorratsrolle abgerollt und intermittierend entlang der Verpackungsmaschine transportiert. Beim Thermoformer wird in einer Formstation zunächst eine Verpackungsmulde in die Unterfolienbahn geformt, die anschließend mit einem Verpackungsgut, insbesondere einem Lebensmittel, befüllt wird. Anschließend wird die Verpackungsmulde in einer Siegelstation mit einer Oberfolie, die an die Unterfolie gesiegelt wird, verschlossen. Die Folienbahn wird dabei ebenfalls von einer Vorratsrolle abgerollt. Oftmals müssen die so hergestellten Verpackungen mit einer individuellen Beschriftung versehen werden, die erst im Rahmen der Verpackungsherstellung aufgebracht werden kann. Diese Beschriftung soll möglichst fälschungssicher, unzerstörbar und/oder auch bei einer transparenten Folie gut sichtbar und/oder maschinell auslesbar sein. Es ist deshalb oftmals notwendig, dass die Verpackung an oder im Bereich derselben Stelle zwei oder mehr Beschichtungen aufweist. In der Vergangenheit war es jedoch oftmals schwierig, die Beschichtungen an derselben Stelle der Verpackung vorzusehen.

Es war deshalb die Aufgabe der vorliegenden Erfindung, ein Verfahren und eine Verpackungsmaschine zur Verfügung zu stellen, die die Nachteile des Standes der Technik nicht aufweist.

Gelöst wird die Aufgabe mit einem Verfahren gemäß Anspruch 1.

Die vorliegende Erfindung betrifft ein Verfahren zur Herstellung einer Verpackung mit einer Verpackungsmaschine. Bei einer derartigen Verpackungsmaschine kann es sich beispielsweise um einen sogenannten Thermoformer, aber auch um einen Traysealer handeln. Auf derartigen Verpackungsmaschinen werden in der Regel Kunststofffolien verarbeitet. Bei dem erfindungsgemäßen Verfahren wird eine gefüllte Verpackungsmulde mit einer Folie verschlossen, wobei die Folie mit der Verpackungsmulde stoffschlüssig, insbesondere durch Siegeln, verbunden wird. Bei dem erfindungsgemäßen Verfahren wird jede Verpackungsmulde intermittierend mit einem bestimmten Vorzug entlang der Verpackungsmaschine transportiert. Dies kann beispielsweise dadurch erfolgen, dass eine Unterfolienbahn, die rechts und links von Ketten ergriffen wird, intermittierend entlang der Verpackungsmaschine transportiert wird. Dies kann aber auch dadurch erfolgen, dass ein Greifer gefüllte Verpackungsmulden in eine Siegelstation und von dort weg transportiert.

Erfindungsgemäß wird nun eine Folie, d. h. entweder die Folie, aus der die Verpackungsmulde hergestellt wird, oder gemäß einer bevorzugten Ausführungsform die Deckelfolie, die an die Unterfolie gesiegelt wird, mit mindestens einer ersten und einer zweiten Beschichtung versehen, wobei deren Auftrag auf die Folie während desselben Vorzugs erfolgt.

Der Auftrag der jeweiligen Beschichtung muss demnach bei demselben Vorzug sequentiell erfolgen, wenn sich beide Beschichtungen auf derselben Seite der Folie befinden und zumindest teilweise überdecken. Sind die beiden Beschichtungen auf zwei unterschiedlichen Seiten der Folienbahn vorgesehen, kann der Auftrag auch zumindest teilweise gleichzeitig erfolgen, auch wenn sich die beiden Beschichtungen zumindest teilweise überdecken.

Eine Beschichtung im Sinne der Erfindung ist beispielsweise der Auftrag einer Farbsubstanz, insbesondere durch einen Drucker. Eine Beschichtung im Sinne der Erfindung kann aber auch beispielsweise der Auftrag einer Folie sein.

Vorzugsweise weist die Folie, auf der die Beschichtungen vorgesehen werden, eine erste und eine zweite Seite auf. Die Beschichtungen können dabei auf derselben Seite oder unterschiedlichen Seiten vorgesehen werden.

Die beiden Beschichtungen überdecken sich zumindest teilweise, d.h. bezogen auf die Blickrichtung des Betrachters oder einen Lichtstrahl deckt eine Beschichtung die andere zumindest teilweise ab. Bei einer transparenten Folie dient eine Beschichtung vorzugsweise als Hintergrund für die andere Beschichtung um der Sichtbarkeit zu verbessern. Vorzugsweise unterscheidet sich eine Beschichtung farblich von der anderen Beschichtung.

Vorzugsweise erfolgen die Beschichtungen an einer Stelle sequentiell.

Vorzugsweise können Beschichtungen an unterschiedlichen Stellen der Folie gleichzeitig erfolgen.

Gemäß einer bevorzugten Ausführungsform der vorliegenden Erfindung ist die Beschichtung ein Druckverfahren, beispielsweise ein Thermotransfer-Druckverfahren und/oder ein Heißpräge-Druckverfahren.

Vorzugsweise werden die Beschichtungen mit unterschiedlichen Druckverfahren erzeugt.

Gemäß einer bevorzugten Ausführungsform der vorliegenden Erfindung erfolgen beide Beschichtungen an derselben Stelle der Folie, so dass sich die Beschichtungen zumindest teilweise überdecken. Dadurch ist es beispielsweise möglich, eine Identifikation zur Verfügung zu stellen, die es erlaubt, die jeweilige Verpackung zu individualisieren, d. h. beispielsweise einen Bar- oder QR-Code, der beispielsweise schwarz gedruckt ist, mit einem hellen, beispielsweise weißen Hintergrund zu versehen und dadurch auch auf einer transparenten Folie gut sichtbar zu machen.

Vorzugsweise werden die Beschichtungen mit zwei separaten Beschichtungsmitteln aufgetragen, die jeweils mindestens entlang einer Verfahrrichtung bewegbar sind. Dadurch kann zunächst eine Beschichtung an einem Ort aufgetragen, sodann die Beschichtungsmittel verfahren und dann die nächste Beschichtung an derselben Stelle wie die erste Beschichtung aufgetragen werden.

Vorzugsweise wird zwischen dem Beschichten und dem Verfahren des Beschichtungsmittels eine Verzögerungszeit vorgesehen. Dadurch können beispielsweise Schwingungen, die durch das Verfahren auftreten, abklingen, bevor das Beschichten beginnt. Diese bevorzugte Ausführungsform der vorliegenden Erfindung ist insbesondere bei der Herstellung von sehr exakten Drucken, beispielsweise zur Herstellung von Bar- oder QR-Codes, die sehr exakt sein müssen, wichtig. Bei der Herstellung einer Hintergrundbeschichtung ist eine derartige Abklingzeit in der Regel nicht nötig.

Ein weiterer Gegenstand der vorliegenden Erfindung ist eine Verpackungsmaschine gemäß Anspruch 9.

Dieser Gegenstand der vorliegenden Erfindung betrifft eine Verpackungsmaschine zur Herstellung einer Verpackung mit einer Siegelstation, die eine Folie an einer Verpackungsmulde siegelt, wobei die Verpackungsmulden intermittierend jeweils mit einem Vorzug transportiert werden. Eine derartige Verpackungsmaschine ist beispielsweise ein sogenannter Thermoformer oder ein sogenannter Traysealer.

Erfindungsgemäß weist diese Verpackungsmaschine nun mindestens zwei Beschichtungsmittel auf, die jeweils eine Beschichtung während desselben Vorzugs auf die Folie auftragen. Das heißt, wenn beispielsweise eine Folienbahn fünf Vorzüge braucht, um die erfindungsgemäße Verpackungsmaschine zu durchlaufen und dabei eine Verpackung herzustellen, erfolgt die Beschichtung beider Beschichtungsmittel beispielsweise bei dem dritten Vorzug. Dadurch wird insbesondere eine bessere Überdeckung der beiden Beschichtungen sichergestellt, was bei einer Beschichtung bei unterschiedlichen Vorzügen kaum möglich war.

Die zu beschichtende Folienbahn steht dabei vorzugsweise still.

Vorzugsweise ist mindestens ein Drucker, vorzugsweise zwei oder mehr Drucker entlang einer Verfahrrichtung bewegbar vorgesehen. Für den Fall, dass ein Format bestehend aus einer Matrize von mehreren Verpackungsmulden beschichtet werden muss, ist der jeweilige Drucker vorzugsweise in zwei Richtungen, insbesondere entlang einer X-Y-Verstellung, verfahrbar.

Vorzugsweise weist die erfindungsgemäße Verpackungsmaschine ein Gestänge auf, entlang dessen der oder die Drucker durch einen Motor angetrieben verschiebbar vorgesehen sind. Besonders bevorzugt ist dieses Gestänge insgesamt verschiebbar vorgesehen, um beispielsweise ein Format, das aus mehreren Zeilen und Spalten besteht bedrücken zu können, ohne die Folienbahn zu bewegen.

Vorzugsweise kann die Stellung mindestens eines, vorzugsweise mehrerer Druck entlang des Gestänges verändert werden. Nach der Änderung wird diese Stellung dann reversibel fixiert.

Eine bevorzugte Ausführungsform der Erfindung ist eine Verpackungsmaschine, die eine Unterfolienbahn von einer Vorratsrolle abrollt und intermittierend entlang der Verpackungsmaschine transportiert und dabei in einer Formstation Verpackungsmulden in die Unterfolienbahn formt, die dann mit einem Verpackungsgut befüllt werden, wobei anschließend in einer Siegelstation eine Oberfolienbahn an die Unterfolienbahn gesiegelt wird, wobei die Oberfolienbahn von einer Vorratsrolle abgerollt wird.

Im Folgenden werden die Erfindungen anhand der Figuren erläutert. Diese Erläuterungen sind lediglich beispielhaft und schränken den allgemeinen Erfindungsgedanken nicht ein. Die Erläuterungen gelten für alle Gegenstände der vorliegenden Erfindung gleichermaßen.
- **Figur 1**: zeigt die erfindungsgemäße Verpackungsmaschine.
- **Figur 2**: zeigt die beiden Beschichtungsmittel.
- **Figur 3**: zeigt die Unterfolienbahn.
- **Figuren 4a, 4b, 4c**: zeigen unterschiedliche Formen der Beschichtung.
- **Figur 5**: zeigt Details der beiden Beschichtungsmittel.

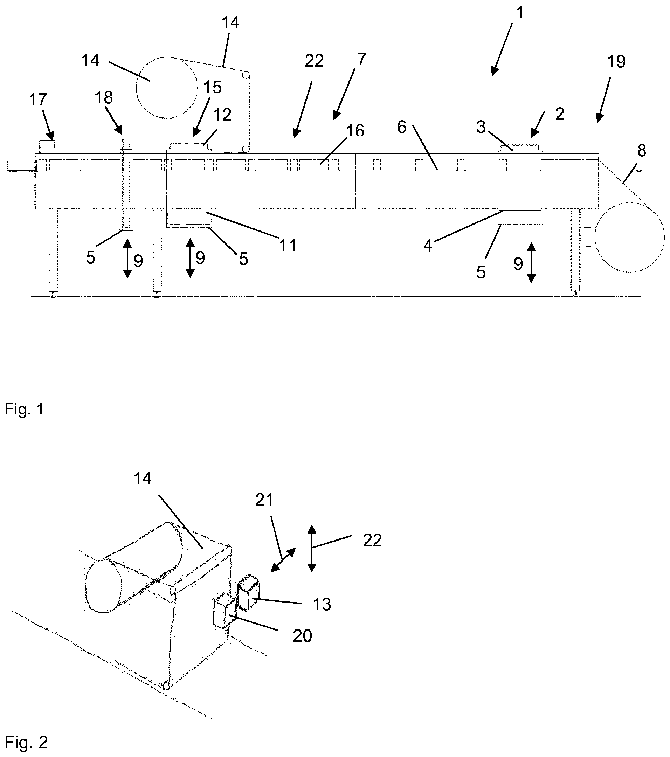

**Figur 1** zeigt die erfindungsgemäße Verpackungsmaschine 1, die eine Tiefziehstation 2, eine Füllstation 7 sowie eine Siegelstation 15 aufweist. Eine Unterfolienbahn 8, hier eine Kunststofffolienbahn 8, wird von einer Vorratsrolle abgezogen und taktweise entlang der erfindungsgemäßen Verpackungsmaschine von rechts nach links transportiert. Bei einem Takt wird die Unterfolienbahn 8 um einen Vorzug weitertransportiert, wobei es mehrerer bedarf Vorzüge, um eine fertige Verpackung herzustellen. Dafür weist die Verpackungsmaschine zwei Transportmittel (nicht dargestellt), in dem vorliegenden Fall jeweils zwei Endlosketten, auf, die rechts und links von der Unterfolienbahn 8 angeordnet sind. Sowohl am Anfang als auch am Ende der Verpackungsmaschine ist für jede Kette jeweils mindestens ein Zahnrad vorgesehen, um das die jeweilige Kette umgelenkt wird. Mindestens eines dieser Zahnräder ist angetrieben. Die Zahnräder im Eingangsbereich und/oder im Ausgangsbereich können miteinander, vorzugsweise durch eine starre Welle, verbunden sein. Jedes Transportmittel weist eine Vielzahl von Klemmmitteln auf, die die Unterfolienbahn 8 im Einlaufbereich 19 klemmend ergreifen und die Bewegung des Transportmittels auf die Unterfolienbahn 8 übertragen. Im Auslaufbereich der Verpackungsmaschine wird die klemmende Verbindung zwischen dem Transportmittel und der Unterfolienbahn 8 wieder gelöst. Stromabwärts von dem Einlaufbereich 19 ist ein Heizmittel vorgesehen, das die Folienbahn 8 erwärmt, insbesondere wenn diese stillsteht. In der Tiefziehstation 2, die über ein Oberwerkzeug 3 und ein Unterwerkzeug 4 verfügt, das die Form der herzustellenden Verpackungsmulde aufweist, werden die Verpackungsmulden 6 in die angewärmte Folienbahn 8 geformt. Das Unterwerkzeug 4 ist auf einem Hubtisch 5 angeordnet, der, wie durch den Doppelpfeil symbolisiert wird, vertikal verstellbar ist. Vor jedem Folienvorschub wird das Unterwerkzeug 4 abgesenkt und danach wieder angehoben. Im weiteren Verlauf der Verpackungsmaschine werden die Verpackungsmulden dann in der Füllstation 7 mit dem Verpackungsgut 16 befüllt. In der sich daran anschließenden Siegelstation 15, die ebenfalls aus einem Oberwerkzeug 12 und einem vertikal verstellbaren Unterwerkzeug 11 besteht, wird eine Oberfolie 14 stoffschlüssig durch Siegeln an der Unterfolienbahn 8 befestigt. Auch in der Siegelstation werden das Oberwerkzeug und/oder das Unterwerkzeug vor und nach jedem Folientransport abgesenkt bzw. angehoben. Auch die Oberfolie 14 kann in Transportmitteln geführt sein bzw. von Transportketten transportiert werden, wobei sich diese Transportmittel dann nur von der Siegelstation und ggf. stromabwärts erstrecken. Ansonsten gelten die Ausführungen, die zu den Transportmitteln der Unterfolie gemacht wurden. Auch die Oberfolie kann mit einem Heizmittel angewärmt und tiefgezogen werden. Für das Siegeln ist als Unterwerkzeug 11 beispielweise ein heizbarer Siegelrahmen vorgesehen, der pro Verpackungsmulde eine Öffnung aufweist, in die die Verpackungsmulde beim Siegeln, d.h. bei der Aufwärtsbewegung des Untersiegelwerkzeugs, eintaucht. Zum Siegeln werden die Ober- und die Unterfolienbahn zwischen dem Ober- und dem Unterwerkzeug 12, 11 zusammengepresst und verbinden sich unter dem Einfluss von Wärme und Druck. Nach dem Siegeln werden die Werkzeuge 11, 12 wieder vertikal auseinanderbewegt. Zwischen der Vorratsrolle und dem Siegelwerkzeug ist vorzugsweise ein Tänzer vorgesehen, der den intermittierenden Vorschub der Unterfolie 8 und damit den intermittierenden Abzug der Oberfolienbahn 14 ausgleicht. Der Tänzer kann als Folienbahnspeicher und/oder zur Erzeugung einer bestimmten Folienspannung dienen. Der Fachmann versteht, dass mehrere Oberfolien vorhanden sein können, beispielsweise bei einer mehrlagigen Packung oder einer Packung mit mehreren Oberfolien. Vorzugsweise ist dann im Verlauf jeder Oberfolie ein Tänzer vorgesehen. Der Fachmann versteht des Weiteren, dass auch im Bereich der Unterfolie 8 ein Tänzer vorgesehen sein kann, vorzugsweise stromabwärts von deren Vorratsrolle. Vor und/oder beim Siegeln der Oberfolie an die Unterfolie erfolgt in jeder Verpackungsmulde vorzugsweise ein Gasaustausch. Dafür wird die in der Verpackungsmulde vorhandene Luft zunächst teilweise abgesaugt und dann durch ein Austauschgas ersetzt. Dafür werden im Bereich jedes Formats in die Unterfolie im Bereich der Transportketten Löcher in die Unterfolienbahn eingebracht, durch die die Luft zwischen den Folienbahnen 8, 14 abgesaugt und das Austauschgas dann eingeblasen wird. Im weiteren Verlauf der Verpackungsmaschine werden die fertiggestellten Verpackungen vereinzelt, was in dem vorliegenden Fall mit dem Querschneider 18 und dem Längsschneider 17 erfolgt. Der Querschneider 18 ist in dem vorliegenden Fall ebenfalls mit einer Hubeinrichtung 9 anhebbar bzw. absenkbar.

Die erfindungsgemäße Verpackungsmaschine kann aber auch ein sogenannter Traysealer sein, bei dem gefüllte Verpackungsmulden mit einer Deckelfolie verschlossen werden.

**Figur 2** zeigt die beiden Beschichtungsmittel 13, 20, die vorzugsweise jeweils einen Drucker mit einem Druckkopf sind. Die beiden Beschichtungsmittel 13, 20 sind vorzugsweise separat voneinander ansteuerbar. Vorzugsweise bewegen sich die beiden Druckköpfe unabhängig voneinander. Vorzugsweise sind die beiden Beschichtungsmittel unterschiedlich ausgeführt und applizieren jeweils eine unterschiedliche Beschichtung auf die Folienbahn 14, an dieselbe Stelle der Folienbahn 14, d. h. die beiden Beschichtungen überdecken sich zumindest teilweise. Bei der Ausführungsform gemäß Figur 2 befinden sich die beiden Beschichtungsmittel auf derselben Seite der Folienbahn 14. Der Fachmann versteht, dass diese auch auf unterschiedlichen Seiten der Folienbahn 14 vorgesehen sein können. Des Weiteren versteht der Fachmann, dass das erfindungsgemäße Verfahren bzw. die erfindungsgemäße Vorrichtung nicht nur auf eine Beschichtung der Folienbahn 14, sondern auch alternativ oder zusätzlich für eine Beschichtung der Folienbahn 8 anwendbar ist. Vorzugsweise sind die beiden Beschichtungsmittel 13, 20 entlang mindestens einer Verfahrrichtung 21, vorzugsweise entlang zweier Verfahrrichtungen 21, 22, insbesondere entlang derselben Verfahrachse, mit einem Antrieb verschiebbar vorgesehen, so dass die Beschichtungen an derselben Stellen nacheinander oder mehrere Beschichtungen nebeneinander bei einem Vorzug vorgesehen werden können. Vorzugsweise ist die Position mindestens eines Druckers relativ zu dem Gestänge einstellbar. Dies kann beispielsweise bei einem Formatwechsel nötig sein. Der jeweilige Drucker wird dann in seiner neuen Position an dem Gestänge vorzugsweise reversibel fixiert.

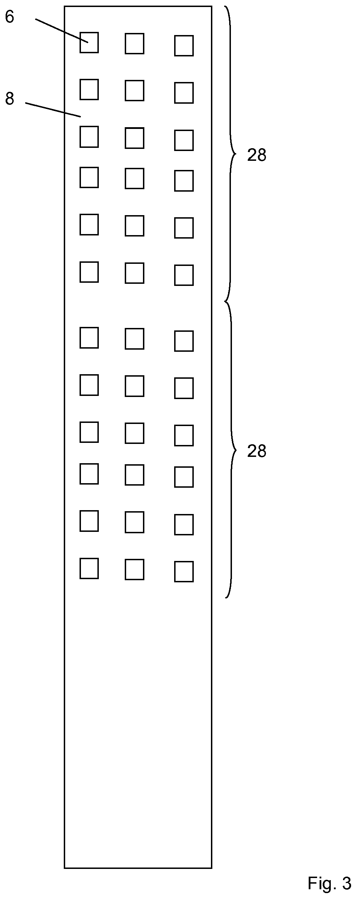

**Figur 3** zeigt beispielhaft ein Detail der Verpackungsmaschine gemäß Figur 1. Dargestellt ist die Unterfolienbahn 8, die intermittierend entlang der Verpackungsmaschine mit einer Vielzahl von Vorzügen transportiert wird. Bei jedem Vorzug wird ein Format an Verpackungsmulden, hier ein 3x6-Format, um eine bestimmte Vorzugslänge weitertransportiert, bis das jeweilige Format das Auslaufende der Verpackungsmaschine erreicht hat. Erfindungsgemäß werden während desselben Vorzugs, beispielsweise während des ersten oder zweiten Vorzugs der Oberfolienbahn oder während des dritten oder vierten Vorzugs der Unterfolienbahn, die Beschichtungen der jeweiligen Folienbahn vorgesehen.

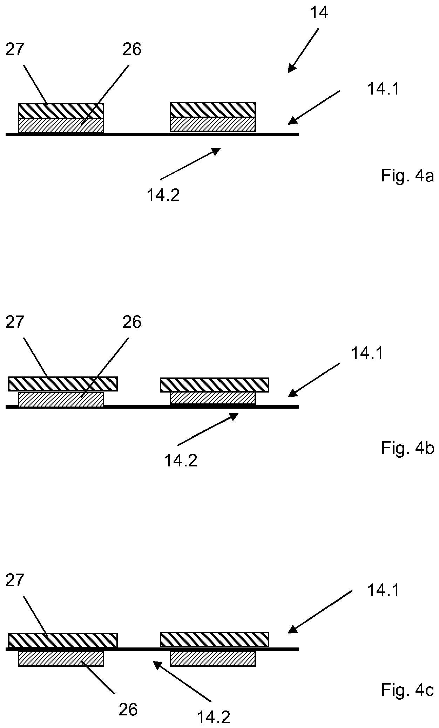

**Figur 4** zeigt beispielhaft unterschiedliche Beschichtungen, die auf die Folienbahn 14 aufgetragen werden. Erfindungsgemäß werden an jeder Stelle jeweils zwei Beschichtungen 26, 27 vorgesehen, die sich zumindest teilweise überdecken. Beispielsweise handelt es sich bei der Beschichtung 26 um ein Identifikationsmittel, beispielsweise einen Strich- oder QR-Code, und bei der Beschichtung 27 um eine Flächenbeschichtung, die als Hintergrund für die Beschichtung 26 dient. Alle Beispiele gemäß Figur 4 zeigen zwei Beschichtungen, die nebeneinander vorgesehen sind, d. h. insbesondere für zwei nebeneinander liegende Verpackungsmulden geeignet sind. Bei allen Beispielen gemäß Figur 4 ist die Folienbahn 14 vorzugsweise transparent und weist eine erste Folienseite 14.1 und eine zweite Folienseite 14.2 auf, wobei die Folienseite 14.1 vorzugsweise der Verpackungsmulde zugerichtet vorgesehen ist, d. h. sich innerhalb der geschlossen Verpackung befindet und die zweite Oberfläche 14.2 außerhalb der Verpackung angeordnet ist.

Bei dem Beispiel gemäß **Figur 4a** sind beide Beschichtungen an derselben Stelle übereinander angeordnet und in dem vorliegenden Fall kongruent.

Bei der Ausführungsform gemäß **Figur 4b** sind ebenfalls beide auf der ersten Verpackungsseite 14.1 vorgesehen, wobei in diesem Fall die Beschichtung 27 zumindest abschnittsweise über die Beschichtung 26 hinaussteht.

Die Ausführungsformen gemäß Figur 4a und 4b haben den Vorteil, dass sich beide Beschichtung innerhalb der Verpackung befinden, d. h. durch die darüber liegende Verpackungsfolie geschützt werden. Dadurch kann es zu keiner Zerstörung einer der Beschichtungen kommen und/oder die Beschichtungen sind vor Einflussnahme, beispielsweise Fälschungen, gesichert.

Bei der Ausführungsform gemäß **Figur 4c** sind die Beschichtungen 26, 27 auf unterschiedlichen Seiten der Folienbahn 14 angeordnet. Dennoch befinden sie sich an derselben Stelle und werden während desselben Vorzugs erzeugt.

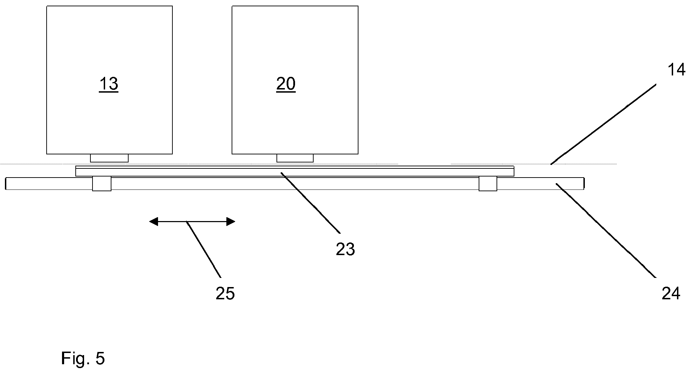

**Figur 5** zeigt ein Detail der erfindungsmäßen Vorrichtung. In dem vorliegenden Fall sind die beiden Beschichtungsmittel 13, 20 zu sehen, die, wie bereits anhand von Figur 2 erläutert, in mindestens einer Verstellrichtung 21, 22, insbesondere entlang einer gemeinsamen Verstellachse, verstellbar vorgesehen sind. Gegenüberliegend von mindestens einem der beiden Beschichtungsmittel, vorzugsweise gegenüberliegend von beiden Beschichtungsmitteln 13, 20, ist eine Gegendruckplatte 23 vorgesehen, die vorzugsweise gemeinsam mit den beiden Beschichtungsmitteln 13, 20 entlang einer Führung, hier eines Gestänges 24, verschiebbar vorgesehen sind. Die Folienbahn befindet sich zwischen den Beschichtungsmitteln 13, 20 und der Gegendruckplatte.

### Bezugszeichenliste:

- 1: Verpackungsmaschine
- 2: Formstation, Tiefziehstation
- 3: Oberwerkzeug der Tiefziehstation
- 4: Unterwerkzeug der Tiefziehstation
- 5: Hubtisch, Träger eines Werkzeugs der Siegel-, Tiefziehstation und/oder der Schneideinrichtung
- 6: Verpackungsmulde
- 7: erste Füllstation
- 8: Folienbahn, Unterfolienbahn
- 9: Hubeinrichtung
- 10: Antrieb
- 11: Unterwerkzeug der Siegelstation
- 12: Oberwerkzeug der Siegelstation
- 13: Beschichtungsmittel, erster Drucker
- 14: Oberfolienbahn, Deckelfolie
- 14.1: erste Folienseite
- 14.2: zweite Folienseite
- 15: Siegelstation
- 16: Verpackungsgut
- 17: Längsschneider
- 18: Querschneider
- 19: Einlaufbereich
- 20: Beschichtungsmittel, zweiter Drucker
- 21: erste Verfahrrichtung der Drucker
- 22: zweite Verfahrrichtung der Drucker
- 23: Gegendruckplatte
- 24: Gestänge
- 25: Verfahrrichtung der Gegendruckplatte 23
- 26: erste Beschichtung, erster Druck
- 27: zweite Beschichtung, zweiter Druck
- 28: Vorzug

## Patentansprüche

1. Verfahren zur Herstellung einer Verpackung mit einer Verpackungsmaschine (1), bei dem eine Folie (14) auf eine gefüllte Verpackungsmulde gesiegelt wird, wobei jede Verpackungsmulde intermittierend mit einem bestimmten Vorzug (28) entlang der Verpackungsmaschine (1) transportiert wird, wobei die Folie (14) vor dem Siegeln mit mindestens einer ersten und einer zweiten Beschichtung (26, 27) versehen wird, deren Auftrag auf die Folie (14) während desselben Vorzugs (28) erfolgt **dadurch gekennzeichnet, dass** eine Beschichtung (27) die andere Beschichtung (26) zumindest teilweise überdeckt.

2. Verfahren nach Anspruch 1, **dadurch gekennzeichnet, dass** die Folie eine erste und eine zweite Seite (14.1, 14.2) aufweist und dass die Beschichtungen (26, 27) auf derselben oder unterschiedlichen Seiten erfolgt.

3. Verfahren nach einem der voranstehenden Ansprüche, **dadurch gekennzeichnet, dass** die Beschichtungen (26, 27) sequentiell erfolgen.

4. Verfahren nach einem der voranstehenden Ansprüche, **dadurch gekennzeichnet, dass** die Beschichtung (26, 27) ein Druck ist.

5. Verfahren nach Anspruch 4, **dadurch gekennzeichnet, dass** die Beschichtungen (26, 27) mit unterschiedlichen Druckverfahren erzeugt werden.

6. Verfahren nach einem der voranstehenden Ansprüche, **dadurch gekennzeichnet, dass** beide Beschichtungen (26, 27) an derselben Position der Folie (14) erfolgen.

7. Verfahren nach einem der voranstehenden Ansprüche, **dadurch gekennzeichnet, dass** die Beschichtungen mit mindestens zwei Beschichtungsmitteln (13, 20) aufgetragen werden, die jeweils entlang mindestens einer Verfahrrichtung (21, 22) bewegbar sind.

8. Verfahren nach Anspruch 7, **dadurch gekennzeichnet, dass** zwischen dem Beschichten und dem Verfahren des Beschichtungsmittels (26, 27) eine Verzögerungszeit vorgesehen wird.

9. Verpackungsmaschine (1), zur Herstellung einer Verpackung, mit einer Siegelstation (15), die eine Folie (14) an eine Verpackungsmulde (6) siegelt und die die Verpackungsmulden intermittierend jeweils mit einem Vorzug (28) transportiert, wobei sie zwei Beschichtungsmittel (13, 20) aufweist, die jeweils eine Beschichtung (26, 27) während desselben Vorzugs auf die Folie (14) auftragen, wobei mindestens ein Beschichtungsmittel (13, 20) entlang einer Verfahrrichtung (21, 22) bewegbar ist und die Beschichtungsmittel (13, 20) jeweils eine Beschichtung (27) auf die Folie (14) auftragen, die sich zumindest teilweise überdecken.

10. Verpackungsmaschine (1) nach Anspruch 9, **dadurch gekennzeichnet, dass** sie eine Unterfolienbahn (8) von einer Vorratsrolle abrollt und intermittierend entlang der Verpackungsmaschine transportiert und dabei in einer Formstation (2) Verpackungsmulden (6) in die Unterfolienbahn (8) formt, die dann mit einem Verpackungsgut (16) befüllt werden, wobei anschließend in einer Siegelstation (15) eine Oberfolienbahn (14) an die Unterfolienbahn (8) gesiegelt wird, wobei die Oberfolienbahn (14) von einer Vorratsrolle abgerollt wird.

11. Verpackungsmaschine nach einem der Ansprüche 9 oder 10, **dadurch gekennzeichnet, dass** die Beschichtungsmittel (13, 20) entlang einer X-Y-Verstellung verfahrbar sind.

## Claims

1. Method for producing an item of packaging by way of a packaging machine (1), in which a film (14) is sealed onto a filled packaging trough, wherein each packaging trough is transported intermittently by way of a specific advancing motion (28) along the packaging machine (1), wherein the film (14) prior to sealing is provided with at least one first and one second coating (26, 27), the application of said coatings (26, 27) to the film (14) being performed during said advancing motion (28),
**characterized in that** one coating (27) at least partially covers the other coating (26).

2. Method according to Claim 1,
**characterized in that** the film has a first and a second side (14.1, 14.2), and **in that** the coatings (26, 27) are performed on the same or on different sides.

3. Method according to one of the preceding claims, **characterized in that** the coatings (26, 27) are performed sequentially.

4. Method according to one of the preceding claims, **characterized in that** the coating (26, 27) is a print.

5. Method according to Claim 4,
**characterized in that** the coatings (26, 27) are generated by way of dissimilar printing methods.

6. Method according to one of the preceding claims, **characterized in that** both coatings (26, 27) are applied to the same position on the film (14).

7. Method according to one of the preceding claims, **characterized in that** the coatings are applied by way of at least two coating means (13, 20) which are in each case movable along at least one displacement direction (21, 22).

8. Method according to Claim 7,
**characterized in that** a temporal delay is provided between the coating and the displacement of the coating means (26, 27).

9. Packaging machine (1) for producing an item of packaging, having a sealing station (15) which seals a film (14) to a packaging trough (6) and which transports the packaging troughs intermittently in each case by way of an advancing motion (28), wherein said sealing station has two coating means (13, 20) which in each case apply one coating (26, 27) to the film (14) during said advancing motion, wherein at least one coating means (13, 20) is movable along a displacement direction (21, 22), and the coating means (13, 20) apply in each case one coating (27) to the film (14), said coatings (26, 27) at least partially covering one another.

10. Packaging machine (1) according to Claim 9, **characterized in that** said packaging machine (1) unrolls a lower film web (8) from a storage roll and transports said lower film web (8) intermittently along the packaging machine, and herein in a forming station (2) forms packaging troughs (6) in the lower film web (8), said packaging troughs (6) then being filled with an item of packaged goods (16), wherein subsequently in a sealing station (15) an upper film web (14) is sealed to the lower film web (8), wherein the upper film web (14) is unrolled from a storage roll.

11. Packaging machine according to one of Claims 9 or 10,
**characterized in that** the coating means (13, 20) are displaceable along an X-Y adjustment.

## Revendications

1. Procédé de fabrication d'un emballage au moyen une machine de production d'emballages (1), dans lequel un film (14) est scellé sur un creux d'emballage rempli, chaque creux d'emballage étant transporté par intermittence avec un pré-étirage déterminé (28) le long de la machine de production d'emballages (1), le film (14) étant pourvu, avant le scellement, d'au moins un premier et un deuxième revêtement (26, 27) dont l'application sur le film (14) est effectuée pendant le même pré-étirage (28), **caractérisé en ce qu'**un revêtement (27) recouvre au moins partiellement l'autre revêtement (26) .

2. Procédé selon la revendication 1, **caractérisé en ce que** le film possède un premier et un deuxième côté (14.1, 14.2) et **en ce que** les revêtements (26, 27) sont effectués sur les mêmes faces ou sur des faces différentes.

3. Procédé selon l'une des revendications précédentes, **caractérisé en ce que** les revêtements (26, 27) sont effectués séquentiellement.

4. Procédé selon l'une des revendications précédentes, **caractérisé en ce que** le revêtement (26, 27) est une impression.

5. Procédé selon la revendication 4, **caractérisé en ce que** les revêtements (26, 27) sont réalisés avec différents procédés d'impression.

6. Procédé selon l'une des revendications précédentes, **caractérisé en ce que** les deux revêtements (26, 27) sont effectués à la même position du film (14).

7. Procédé selon l'une des revendications précédentes, **caractérisé en ce que** les revêtements sont appliqués avec au moins deux moyens de revêtement (13, 20) qui sont chacun mobile dans au moins un sens de déplacement (21, 22) .

8. Procédé selon la revendication 7, **caractérisé en ce qu'**un temps de retard est prévu entre le processus de revêtement et le processus de déplacement du moyen de revêtement (26, 27) .

9. Machine de production d'emballages (1), destinée à produire un emballage, comprenant une station de scellement (15) qui scelle un film (14) sur un creux d'emballage (6) et qui transporte les creux d'emballage par intermittence à chaque fois avec un pré-étirage (28), la machine comprenant deux moyens de revêtement (13, 20) qui appliquent chacun un revêtement (26, 27) sur le film (14) pendant le même pré-étirage, au moins un moyen de revêtement (13, 20) étant mobile dans un sens de déplacement (21, 22) et les moyens de revêtement (13, 20) appliquant chacun un revêtement (27) sur le film (14), lesquels revêtements se recouvrent au moins partiellement.

10. Machine de production d'emballages (1) selon la revendication 9, **caractérisée en ce qu'**elle déroule une bande de film inférieure (8) d'un rouleau d'alimentation et la transporte par intermittence le long de la machine de production d'emballages et forme alors, dans une station de formage (2), des creux d'emballage (6) dans la bande de film inférieur (8), lesquels creux sont ensuite remplis d'un produit d'emballage (16), une bande de film supérieure (14) étant ensuite scellée à la bande de film inférieure (8) dans une station de scellement (15), la bande de film supérieure (14) étant déroulée d'un rouleau d'alimentation.

11. Machine de production d'emballages selon l'une des revendications 9 ou 10, **caractérisée en ce que** les moyens de revêtement (13, 20) sont mobiles suivant un déplacement X-Y.
